# EUROPÄISCHE PATENTSCHRIFT

(11) **EP 2 535 722 B1**
(45) Veröffentlichungstag und Bekanntmachung des Hinweises auf die Patenterteilung: **20.05.2015**
(21) Anmeldenummer: 12171900.9
(22) Anmeldetag: 14.06.2012
(51) Int. Cl.: G01P 3/487, G01P 1/02

(54) **Geber in Form eines Plastoferrit-Ringes sowie Vorrichtung enthaltend einen solchen Geber**
Transmitter in the form of a plastoferrite ring and device comprising such a transmitter
Transmetteur sous forme d'une bague de plasto-ferrite et dispositif contenant un tel transmetteur

(30) Priorität: 16.06.2011 DE 102011051117
(43) Veröffentlichungstag der Anmeldung: 19.12.2012
(73) Patentinhaber: Ströter Antriebstechnik GmbH, D-40549 Düsseldorf (DE)
(72) Erfinder: Ströter, Hans, 56651 Niederzissen-Rodder (DE)
(74) Vertreter: Kreuzkamp, Markus

(56) Entgegenhaltungen:
- DE-A1-102008 051 242
- DE-U1-202010 005 645
- US-A- 5 608 277
- US-A1- 2009 261 693

## Beschreibung

### TECHNISCHER BEREICH

Die vorliegende Erfindung ist im Bereich von Gebern für Impulsgeber angesiedelt. Impulsgeber sind Sensor-Arrays, welche Pulse in Abhängigkeit einer mechanischen Bewegung bereitstellen. Über die Pulse kann nachfolgend eine Regelung der Bewegung erfolgen. Die Erfindung betrifft einen Geber in Form eines Plastoferrit-Ringes gemäß des Oberbegriffs des unabhängigen Hauptanspruches in einer Vorrichtung enthaltend den beanspruchten Geber, bevorzugt eine Vorrichtung in Form eines Impulsgebers, besonders bevorzugt eine Vorrichtung in Form eines per Flansch anschließbaren Antriebs.

### BESCHREIBUNG DES STANDES DER TECHNIK

Plastoferrit bezeichnet eine Partikel-Kunststoff-Mischung, bei der permanent magnetisierbare Partikel in einer Kunststoffmatrix eingebettet sind. Diese Mischung kann flüssig angesetzt äußerst vielseitig verwendet werden und durch Extrudieren, Spritzgießen, Formgießen oder auch Druckgießen in die gewünschte Form gebracht und ausgehärtet werden. Im ausgehärteten Zustand können dergestalt hergestellte Folien und flächige, flexible Körper deutlich einfacher zurechtgeschnitten und dimensioniert werden.

In dauerelastischen Kunststoffen geträgerte Ferrit-Partikel stellen dabei Magnete bereit, welche den bekannten Ferrit-Magneten ähneln, aber nicht mehr so schlag- oder rißempfindlich sind. Im Bereich der Automobiltechnik finden solche Plastoferritringe daher als Geber in Schlag- und Vibrationsbelasteten Baugruppen wie Rad-Drehsensoren oder ABS-Steuergruppen Verwendung.

Nachteilig bei den bekannten Plastoferriten ist, dass deren magnetische Eigenschaften gegenüber den Ferrit-Magneten um etwa zwei Drittel kleiner und weniger gleichmäßig ausfallen. Anwendungsbereiche, in denen die Magnetkraft sowie Feldliniendichte einen präzisen Mindestwert nicht unterschreiten darf, gelten für Plastoferrite daher als ungeeignet.

Ein solcher Anwendungsbereich ist der Bereich der wellengeträgerten Geber.

Ein magnetischer Geber weist unterschiedlich magnetisierte Bereiche auf, welche von einem Nehmer ausgelesen und in Mess- und Regelbaugruppen verarbeitet und ausgewertet werden.

Eine Welle bezeichnet hierbei eine längserstreckte Baugruppe, welche durch Rotation eine Kraft überträgt.

'Wellengeträgert' beschreibt mithin einen als Geber dienenden Plastoferrit-Ring, welcher an einer Welle befestigt ist und die Drehung der Welle gleichsinnig mit ausführt.

Nehmer sind bei magnetischen Gebern häufig als induktive, magnetoresistive oder HallSpannungs-Sensoren oder AMR-Sensoren ausgebildet und in einem Impulsgeber angeordnet. Den Sensoren ist gemein, dass für ein wirtschaftlich verwertbares Signal eine Mindeststärke des Magnetfeldes gewährleistet sein muss. Zu schwache Felder können nur mit sehr teurer Sensorik wahrgenommen werden und können durch übliche, intermittierend auftretende Magnet-Störfelder vollständig überlagert werden.

Plasto-Ferrite sind ob ihrer schwachen, potentiellen Magnetstärke geringerer Gleichmäßigkeit mithin schlechtere, schwache Geber.

In wellengeträgerter Position unterliegen Geber zusätzlich den Vibrationen und Schwingungen, welche unweigerlich mit der Kraftübertragung einhergehen. Daher ist die übliche Lösung, nämlich das Verringern des Abstandes zwischen Geber-Oberfläche und Nehmer-Sensor, hier gefährlich: Durch Vibrationen kommt es dann bei zu geringem Abstand zum Aufsetzen des Nehmer-Sensors auf der rotierenden Geber-Oberfläche. Da die Welle jedoch eine Kraft überträgt, erfolgt der Verschleiß unter starker Reibkraft, wodurch Abrieb, Verschleiß und vorzeitige Zerstörung von Geber, Nehmer und Welle herbeigeführt werden.

Besonders problematisch ist die Situation bei abtrennend umschlossenen Wellen, wie sie beispielsweise in der EP 0 650 058 B2 beschrieben sind: Häufig sind Wellen - gerade in den Eingriffbereichen der Kraftübertragung einer Antriebswelle - nach außen hin abgetrennt umschlossen, um eine Verschmutzung der Mechanik zu vermeiden; bei der Übertragung von Kräften kann der durch ein Gehäuse abgeschlossene Raum zudem vorteilhaft als Kühlvolumen dienen, in besonders anspruchsvollen Fällen auch als Durchflussvolumen für schmierende und/oder kühlende Öle. Gerade bei größeren Kräften und Geschwindigkeiten werden daher häufig vollständig gekapselte Wellengehäuse verbaut. In den abtrennenden Bereichen des Wellengehäuses ist daher ein Abstand der Gehäuseinnenwand zur Außenwand notwendig, der sowohl ein Aufschlagen der drehenden Welle am Gehäuse vermeidet als auch eine ungehinderte Kühl- und Schmierfunktion der eingeschlossenen Luft / des eingefüllten Mediums wie beispielsweise Öl ermöglicht.

Deshalb wurde im umschlossenen Bereich von Wellen, Abtriebswellen, insbesondere von Antriebswellen, von der Verwendung von schwachen Plastoferrit-Magneten als Geber-Element bisher abgesehen: Die schwache Magnetkraft mit geringerem Abstand auszugleichen hätte die Gefahr eines Anschlagens der Welle an der Gehäuseinnenwand so stark erhöht, dass ein extrem schneller Verschleiß zu befürchten gewesen wäre. Weiterhin neigen zu enge Wellenabstände zum Überhitzen und erlauben keinen ausreichenden Durchfluss von Luft sowie kühlendem/schmierendem Medium wie Öl.

Mithin ist im allgemeinen Stand der Technik das Vorurteil etabliert, dass Plastoferrite als gehäuseumschlossene, wellengeträgerte Geber ungeeignet sind, da diese hier für eine wirtschaftliche Verwendung nicht die notwendige Qualität im Signal bereitstellen können. Weiterhin ist die Meinung etabliert, Plastoferrite würden in wellengeträgerter Anordnung dabei auch noch die benötigte, mechanische Stabilität einer Welle beeinträchtigen.

Die US 2009 0261603 A1 schlägt vor, einen Plastoferrit-Ring als Geber über ein dicht anflanschbares Wellenlager mitdrehend mit der Welle eines Elektromotors zu koppeln und in den gleichen Flansch einen Impulsgeber in Form einer Platine mit integrierten Sensoren einzusetzen, wobei die Sensoren mit einem Luftspalt zum Plastoferrit-Ring angeordnet sind. In dieser Bauweise wird der Geber zu einem integralen Bestandteil eines angeflanschten Wellenlagers. Dies bietet den Vorteil erhöhter Stabilität, hat aber den Nachteil, dass Geber und Impulsgeber in einer Baugruppe direkt an das Wellenlager gekoppelt und nicht mehr einzeln ausgetauscht oder ohne Gefährdung oder Offenlegung des Lagers gewartet werden können.

Die vorliegende Erfindung ist abweichend auf wellengeträgerte Geber gemäß DE 20 2010 005 645 U1 ausgerichtet, bei denen ein Geber auf der Welle selbst angeordnet ist. Eine entsprechend diesem Dokument ausgestaltete Bauweise stellt einen wirtschaftlich verbessert verwertbaren, wellengeträgerten Geber bereit, welcher das vorbeschriebene Vorurteil überwindet. Die Erfinder haben überraschend festgestellt, dass bei angeflanschten Gehäusen wellengeträgerte Plastoferrite bei Einhaltung bestimmter Spaltmasse ein wirtschaftlich verwertbares und über Nehmer-Sensoren konstant auslesbares Signal bereitstellen, ohne dass hierbei erhöhter Verschleiß oder mangelhafte Kühlleistung festgestellt werden konnte. Die Erfinder führen die überraschend festgestellten Eigenschaften auf die kompakte, platzsparende und gleichmäßig Kraft verteilende Bauweise von Gehäuse-Flanschverbindungen zurück: Durch die geringe Längserstreckung von angeflanschten Baugruppen fallen Vibrationen quer zur Längserstreckung äußerst gering aus. Zudem werden durch die gleichmäßige und dichte Auflage der Flanschverbindung die zwischen Welle, Kraftgeber und Kraftaufnehmer wirkenden Querkräfte gleichmäßig über das Gehäuse verteilt, wodurch zusätzlich eine ungleichmäßige, elastische Deformation des Wellenghäuses vermieden wird. Auf diese Effekte führen die Erfinder zurück, dass messtechnisch geeignete Spaltmasse überraschender Weise nicht zur befürchteten, frühzeitigen Beschädigung von Welle und/oder Sensor führten.

Weiterhin erwiesen sich Plastoferrite in der beanspruchten Form gegenüber den bisher üblichen Bauweisen sogar als vorteilhaft überlegen: In bevorzugter Ausführungsform konnten Sensoren verschleißfrei außenseitig zum umschlossenen Raum angeordnet durch eine trennende Aluminium-Schicht hindurch Verwendung finden; besonders bevorzugt konnte mit magnetoresistiven Sensoren ein Abstand eingehalten werden, welcher ein ungehindertes Durchströmen von Öl und/oder Kühl-Luft ermöglichte, ohne dass es zur Beeinträchtigung der Signalqualität kam.

Problematisch ist bei den gattungsgemäßen Vorrichtungen jedoch, dass im Impulsgeber ein Sensor-Array mehrere, zeitlich gegeneinander versetzte Signale parallel weiterleiten und bei direkt mit dem Array verbundenen, platinengeträgerten Auswertschaltungen in eng nebeneinander geführten Leitungen weiterverarbeiten muss, was die Signalqualität durch wechselseitige Interferenz beeinträchtigen kann.

Aufgabe der vorliegenden Erfindung war es, die gattungsgemäßen Probleme zu überwinden und ein genaueres, klareres Regelsignal sicherzustellen.

Die Lösung der Aufgabe erfolgt gemäß der Merkmale des unabhängigen Anspruches 1.

Weitere Vorteile und Ausführungsformen der vorliegenden Erfindung ergeben sich aus den abhängigen Ansprüchen sowie der nachfolgenden Beschreibung.

### ZUSAMMENFASSUNG DER ERFINDUNG UND BESCHREIBUNG VORTEILHAFTER MERKMALE

Erfindungsgemäß ist ein Geber gemäß Oberbegriff des Anspruches 1 in Form eines Plastoferrit-Ringes als wellengeträgerter Geber angeordnet, wobei der Plastoferrit-Ring im von einem angeflanschten Gehäuse umschlossenen Bereich der Welle mit einem Spaltmaß zum Gehäuse von 0,05 bis 1 mm angeordnet ist und wobei die Signalqualität gemäß sämtlicher Merkmale des Anspruches 1 durch ein spezifisches Platinendesign verbessert wird: Durch Platzierung aller resistiven, kapazitiven und induktiven Bauteile wie Widerstände, Kondensatoren, Spulen oder auch Dioden auf einer Seite der Platine und Anordnung feld-sensitiver IC's wie drahtgebondete IC-Körper auf der anderen Seite der Platine, werden Bauteil-Felder, welche sonst in direkt benachbarter Position die Funktionsweise eines IC beeinträchtigen könnten, vorteilhaft durch die Trägerplatine selbst gedämpft. Zudem können so die IC's mit vorteilhaftem Abstand zueinander und zu dem Sensor-Array platziert werden, wodurch sowohl die Detektion als auch die Interpolation der Impulse stabilisiert und verbessert wird. Dadurch wird bei kompakterem Design ein genaueres, klareres und vielseitigeres Regelsignal zugänglich gemacht.

Die Flanschverbindungen bedingen eine kompakte und gleichmäßig Kraft verteilende Anschlussart, welche trotz Kombination mit der kraftbeaufschlagten Welle sensorgeeignete Spaltmasse ermöglicht. In Vergleichsversuchen wurden bei normalen, gehäuseumschlossenen Wellen bereits ab eingeleiteten Leistungen von 10 Watt mit im Schleifkontakt aufliegenden Gehäuse-Komponenten nach kurzer Zeit erhebliche Schäden der Welle beobachtet.

Bei bevorzugt komplett gekapselter Welle wurden in Vergleichsversuchen ab 90 Watt erhebliche Schäden einer ohne Flansch gekapselten Welle festgestellt. Mit per Flanschverbindung gekapselter Welle konnten in Tests bis 25 Kilowatt übertragener Leistung im umschlossenen Bereich keine frühzeitigen Schleif- oder Abrieb-Schäden festgestellt werden.

Vorteilhaft konnte mit einem Spaltmaß zum Gehäuse von 0,1 bis 0,7 mm mit einer innenseitigen, abgrenzenden Metallschicht um 0,1 mm Dicke der Innenraum des Gehäuses vollständig von den Sensoren getrennt werden. Die Sensoren sind bei solchen Spaltmassen mithin integral in das Gehäuse eines Impulsgebers eintauchend oder integriert verbaut, ohne jedoch im direkten Kontakt mit dem Innenraum zu stehen. Eine statische Aufladung von separat eintauchenden Mess-Sonden über das im Innenraum befindliche Medium oder Kühlmedium wird so sicher vermieden; weiterhin wird die thermische Belastung durch Konvektion und Wärmestrahlung entlang der kraftbeaufschlagten Welle, wie es gerade bei kompakt verbauten Wellen häufig anzutreffen ist und die Signalqualität beeinträchtigt, durch eine Wärme ausleitende und reflektierende Aluminium-Schicht reduziert; auf den letztgenannten Effekt führen die Erfinder die festgestellte, überraschend gute Signalqualität zurück. Trotz einer das Magnetfeld des Plastoferrit-Ringes beeinträchtigenden Metallschicht lieferten Sensoren stets eine gute bis sehr gute Signalqualität.

Besonders vorteilhaft konnte mit einem Spaltmaß zum Gehäuse von 0,2 bis 0,6 mm ein mit Metallschicht vom Innenraum abgetrennter magnetoresistiver Sensor mit linear erstreckter Messfläche präzise die Bewegungsrichtung der Polarisierungen des Plastoferrit-Ringes abbilden. Ein so präzises Signal erlaubt sogar bei extrem langsamer Wellenrotation eine genaue Aussage über Drehrichtung und -geschwindigkeit der Welle. Selbst bei zusätzlicher Durchströmung des Innenraums mit Öl/Kühlmittel wurde die Messgenauigkeit weiterhin beibehalten.

Erfindungsgemäß ist der Plastoferrit-Ring innenseitig mit einer Nabe verbunden, wobei die Nabe kraftschlüssig auf der Welle befestigbar ist. Während die Nabe aus einem Metall mit gleicher Wärmeausdehnung und -leitfähigkeit wie die Welle mit geringer, thermischer Spannung wellenseitig fixiert aufliegt, kann der Plastoferrit-Ring über hintergreifende und/oder aufliegende Ausformungen an der Nabe fixiert werden, wodurch Spannungen und Versetzungen durch die unterschiedlichen Werkstoffeigenschaften von Plasto-Ferrit und Metall verringert werden. Erfindungsgemäß wird der Plastoferrit-Ring dauer-elastisch mit der Nabe verklebt oder vulkanisiert; dadurch wird nur noch eine sichere Befestigung der Nabe an der Welle notwendig, während die dauerhaft elastische Verklebung eine kraftschlüssige, spannungskompensierende Verbindung von Nabe und Plastoferrit-Ring bereitstellt.

Vorteilhaft wird die Nabe auch formschlüssig auf der Welle angebracht; hierbei kann die Nabe über eingreifende Ausformungen mit spezifischer, räumlicher Ausrichtung zur Wellenposition aufgebracht werden. Dies erlaubt bei definiert magnetisiertem und orientiert eingeklebtem Plastoferrit-Ring eine eindeutige, dauerhafte Zuordnung von Magnetisierungen und Wellenpositionen.

Bevorzugt wird eine Nabe, welche kraftschlüssig vom Plastoferrit-Ring umschlossen ist, über eine Klemmverbindung mit der Welle verbunden. Klemmverbindungen stellen über elastische Deformation und damit einhergehende Klemmspannung einen sicheren Halt zweier Flächen bereit, welche wiederum über ihre Rauhigkeiten mikroskopisch fest ineinander verzahnt fixiert sind.

Vorteilhaft sind hierbei radial gleichmäßig angeordnete, wellenseitige, axial erstreckte Auskragungen mit parallelen, matt-rauhen Auflageflächen mit einer Nabeninnenseite mit schräg zu den Auskragungen angeordneten, matt-rauhen Riefen verzahnt; besonders vorteilhaft sind die Riefen entgegengesetzt zur Hauptdrehrichtung der Welle angeordnet und münden an einem Anschlag, wodurch bei schnell beschleunigter Hauptdrehrichtung die Auskragungen entlang der Riefen zum Anschlag hin aufgepresst und intensiv mit der Nabenfläche verzahnt werden.

Bevorzugt weist der Plastoferrit-Ring ausgerichtete, magnetisierbare Partikel auf. Eine solche Ausrichtung wird beispielsweise über ein Verfahren zugänglich, bei dem zumindest nachfolgende Schritte ausgeführt werden:
a1) Einbringen einer flüssigen Ferrit-Kunststoff-Mischung in eine Hohlform und dann a2) vollständiges Ausfüllen der Hohlform mit der Ferrit-Kunststoff-Mischung oder
a3) Gießen von Bändern oder Matten aus Kunststoff, die entsprechend zugeschnitten werden, und dann
b) Ausrichten der Ferrit-Partikel über ein Magnetfeld,
c) Aushärten der plastischen Mischung,
d) Aufbringen von permanenten, abwechselnden Magnetisierungen zumindest im periphären Bereich des Plastoferrit-Ringes und
e) Anbringen des fertigen, magnetisierten Plastoferrit-Ringes auf der Welle.

Eine Ferrit-Kunststoff-Mischung besteht aus einem aushärtbaren, flüssigen Kunststoff und darin partikulär aufgeschlämmten Ferrit-Partikeln. Übliche Ferrit-Partikel werden durch Zerkleinerung gewonnen, weisen eine Verteilung um eine mittlere Korngröße auf und sind in ihrer Korn-Morphologie durch eine unregelmäßige, globuläre Struktur gekennzeichnet. Bevorzugt werden Ferrit-Partikel mit nadelförmiger Morphologie zumindest anteilig in der Ferrit-Kunststoff-Mischung suspendiert. Nadelförmige Ferrit-Partikel richten sich im Magnetfeld entlang der Feldlinien aus und werden dabei wie kleine Stabmagnete magnetisiert. Dadurch weisen diese Partikel eine deutlich stärkere Feldliniendichte an ihren Enden auf und erzeugen bei konzertierter Ausrichtung innerhalb der Mischung ein je nach Ausrichtung deutlich stärkeres oder schwächeres Magnetfeld. Eine eingestellte Feldliniendichte kann beispielsweise über die vorgenannten Schritte bereitgestellt werden.

In flüssiger Form im Schritt a) wird die Mischung zunächst angesetzt und in eine Hohlform eingebracht, bis gemäß b) die Hohlform vollständig ausgefüllt ist. Dies kann beispielsweise über Spritzgiess- oder Extrudiertechniken erfolgen.

In Schritt c) werden die Partikel über ein externes Magnetfeld ausgerichtet. Hierbei werden alle ungleichmäßigen Ferritpartikel entlang ihrer Längsachse parallel zu den einwirkenden, magnetischen Feldlinien in der flüssigen Mischung ausgerichtet; wie vorbeschrieben ist dieser Effekt bei nadelförmigen Ferrit-Partikeln, wie sie über einen Sol-Gel-Prozess oder Fällungsreaktionen gewonnen werden können, besonders ausgeprägt.

Durch Aushärten der Mischung bei ausgerichteten Ferrit-Partikeln wird so ein Plastoferrit-Ring erhalten, dessen Magnetfeld räumlich in Abhängigkeit der Ausrichtung der Partikel in seiner Stärke variiert ist. Durch gezielte, radial wiederholt kontinuierlich zunehmende Feldstärke während der Ausrichtung kann eine in einer Umlaufrichtung kontinuierlich zunehmende Signalstärke eingestellt werden. Eine so kontrolliert eingestellte Anisotropie erlaubt mit einer Mess-Sonde und einer differentiellen Auswert-Schaltung bereits bei geringen Drehungen des Magnetringes eine Bestimmung der Drehrichtung an Hand der Veränderung der Signalstärke.

Durch Aufbringen von permanenten, abwechselnden Magnetisierungen im periphären Bereich des Plastoferrit-Ringes mit konstanter Breite wird eine äquidistante Abfolge von sensortechnisch unterscheidbaren Bereichen bereitgestellt, welche die Drehbewegung der Welle als Wechsel von magnetischen Polarisierungen schrittweise abbildet.

Ein so ausgestalteter Plastoferrit-Ring macht sensortechnisch in Kombination Informationen über Drehgeschwindigkeit und -richtung zugänglich.

Eine weitere, konstruktive Verbesserung bietet das Ausfüllen der Hohlform druckbeaufschlagt unter Aufbringen mindestens einer Stempelfläche, welche die Mischung fest in die Hohlform einpresst. Insbesondere bei viskosen Aufschlämmungen mit geringem Anteil an Gasbläschen werden hierbei sowohl die Gasbläschen im verbauten Plastoferrit-Ring verkleinert als auch die Hohlform in feinen Profilierungen vollständig ausgefüllt, sodass eine höhere Homgenität, Dichte und Formtreue bereitgestellt werden kann, was ein konstanteres und gleichmäßigeres Signal des fertigen Plastoferrit-Ringes sicherstellt.

Einen weiteren, konstruktiven Vorteil ermöglicht das Ausrichten der Ferrit-Partikel über ein abschnittsweise einwirkendes permanentes Magnetfeld der begrenzenden Flächen. Beispielsweise wird ein tangential mit einer Endfläche an der Plastoferrit-Ring-Umfangsfläche anliegender Stabmagnet eine kontinuierlich zum Anlagepunkt zunehmende Ausrichtung der Partikel in einem Sektor des Plastoferrit-Ringes bewirken. Durch Anlage weiterer Stabmagnete wird eine Abfolge von kontinuierlich in einer Dreh-Richtung zunehmenden Ausrichtungen erzeugt. Die Feldstärke des verbauten Plastoferrit-Ringes weist dann entlang der Umfangsfläche ein Sägezahnprofil mit stetigen Anstiegen und nahezu senkrechten Abfällen der Signalstärke auf.

Einen weiteren, konstruktiven Vorteil ermöglicht die Ausrichtung der Ferrit-Partikel über Stempelflächen, welche seitlich die Form des Plastoferrit-Rings begrenzend aufgebracht werden. Hierbei führt eine gezielte Magnetisierung der Stempelfläche im Plastoferrit-Ring eine Abfolge von präzisen Feldstärkewechseln durch Partikel-Ausrichtung herbei.

### Durch die Schritte

b1) stabilisierendes Vorhärten, wobei ein zumindest anteilig enthaltener Polymerisations-Binder die Raumform stabilisierend vorhärtet, und
d1) Erhitzen, wobei die Ferrit-Partikel, bevorzugt induktiv, in der Raumform erhitzt werden, wobei weiterhin gleichzeitig ein zumindest anteilig enthaltener Heiß-Binder abbindet, die Ferrit-Partikel in ihrer räumlichen Ausrichtung fixiert und die Ferrit-Partikel verdichtet und entmagnetisiert werden. Wird bei einem mindestens zweiteiligen Kunststoff-Gemisch über einen ersten, vernetzenden Binder ein Verbund von vorgehärteten Kompartimenten bereitgestellt, bei dem die einzelnen Kompartimente noch flüssige Suspension enthalten. Ein so vorgehärteter Plastoferrit-Ring kann dann der Hohlform entnommen werden und in verschiedene, je nach Anwendungsgebiet ausgestaltete Konstellationen von Permanentmagneten eingelegt werden. Die Permanentmagnete richten die Partikel in den Kompartimenten in der vorbeschriebenen Weise entlang der einwirkenden Feldlinien aus.

Durch Erhitzen der Ferrit-Partikel - was induktiv besonders gezielt und präzise gesteuert möglich ist - können nachfolgend die Kompartimente heiß ausgehärtet werden. Durch die selektive Erhitzung werden dabei die Ferrit-Partikel sowohl entmagnetisiert als auch nachgesintert und in der aushärtenden, umgebenden Kunststoffmatrix fixiert. Dadurch sind nachträgliche Magnetisierungen vorteilhaft frei von Störfeldern. Ein so ausgestalteter Plastoferrit-Ring bleibt durch die vorherige Ausrichtung der Ferritpartikel unbeeinflusst. Ausschließlich die Feldstärke und nicht die Ausrichtung der nachfolgend aufgebrachten, magnetischen Felder entlang der Plastoferrit-Ring-Umfangsfläche sind so präzise gesteuert eingestellt.

Bevorzugt weist der Plastoferrit-Ring eine innenseitige, haftvermittelnde Klebe-Schicht mit einer Dicke im Mikrometerbereich auf, welche ihn auf einer Nabe fixiert, wobei die Nabe wiederum auf die Welle aufschiebbar ist. Eine solche Schicht kann beispielsweise erzielt werden, in dem die Schritte
f1) Aufschieben des Plastoferrit-Ringes auf eine mindestens 20 Grad Celsius kühlere Stahl-Nabe mit zwischen Nabe und Plastoferrit-Ring angeordnetem, dauerelastischem Polymerkleber,
f2) Vernetzen des Klebers unter Erwärmung der Nabe auf mindestens die Temperatur des Plastoferrit-Rings,
f3) Festspannen eines Metallringes mit radial nach außen auskragenden Segmenten auf der Welle, wobei der Außendurchmesser maximal dem Innendurchmesser der Nabe entspricht und der Außendurchmesser der auskragenden Segmente grösser als der Innendurchmesser der Nabe gehalten ist,
f4) kraftschlüssiges Aufschieben der Nabe auf den Metallring unter elastischer Deformation der auskragenden Segmente.
eine Klebeschicht im Mikrometerbereich bereitstellend durchgeführt werden. Durch Aufschieben eines an sich formschlüssig ausgebildeten Plastoferrit-Ringes auf eine mindestens 20 Grad Celsius kühlere Stahl-Nabe ergibt sich ein Ringspalt von wenigen Mikrometern zwischen Nabe und Plastoferrit-Ring. Ein zwischen beiden angeordneter, viskoser Polymerkleber wird so bereits beim Aufschieben des Plastoferrit-Ringes im viksosen Fluss gleichmäßig mit einer Dicke von wenigen Mikrometern zwischen Nabe und Plastoferrit-Ring verteilt. Vorteilhaft wird als Nabe eine gedrehte, nicht nachträglich polierte Stahl-Nabe verwendet, welche entlang der Kontaktfläche noch die herstellungsbedingten, umlaufenden Riefen im Mikrometerbereich aufweist, in welche der Kleber vordringen und formschlüssig aushärten kann. Besonders vorteilhaft weist die Nabe einen überkragenden Rand auf, auf dem der Plastoferrit-Ring seitlich aufliegt und gleichfalls fest verklebt oder vulkanisiert wird.

Durch Erwärmung der Nabe dehnt diese sich aus und drückt den Kleber formschlüssig in vorhandene Ausformungen und Poren in der Nabenoberfläche und entlang der Innenseite des Plastoferrit-Ringes. Besonders vorteilhaft wird ein basisch oder sauer vernetzender Kleber verwendet, welcher sowohl unter Ausbildung dauerelastischer Brücken unter Hitze und Druck vernetzt als auch die Nabenoberfläche flächig anlöst und chemisch extrem feste Bindungsflächen in Form von haftvermittelnden Schichten ausbildet. Besonders vorteilhaft erfolgt hierbei die Erwärmung der Nabe mit kurzem, heißem Impuls allein von deren Innenseite her, sodass die Nabe eine höhere Temperatur annimmt, als der umschließende Plastoferrit-Ring. Dadurch wird die oberflächliche Reaktion auf die Nabe beschränkt, der Druck stark erhöht und der Kleber in sämtliche Poren des Plastoferrit-Ringes hineingepresst; ein so aufgeklebter Plastoferrit-Ring löst sich selbst bei mechanischem Aufbrechen des Plastoferrit-Ringkörpers nicht mehr aus der Verklebung und gewährleistet, dass selbst bei Versagen der Plastoferrit-Ringstabilität und verschlechtertem Sensorsignal keine Plastoferrit-Ringsegmente ausbrechen oder sich von der Nabe lösen.

Durch einen Metallring mit radial auskragenden Segmenten wird eine Klemmverbindung der Nabe mit der Welle zugänglich. Die Klemmverbindung über die radial auskragenden Segmente vermeidet einen direkten, wärmeleitenden Kontakt der Welle mit der Nabe. Vorteilhaft ist hierbei der Metallring aus einem schlecht wärmeleitenden Material gefertigt, besonders vorteilhaft mit einer besonders rauhen, wärmeisolierenden Keramik-Außenschicht versehen; eine Keramik-Außenschicht verzahnt sich intensiv mit deutlich stärkerer Reibkraft mit der Innenfläche der Nabe und verringert zusätzlich die Wärmeeinleitung in den wellengeträgerten Geber.

Erfindungsgemäß weist die beanspruchte Vorrichtung als Impulsgeber einen Zwischenflansch-Sensor auf. Der Zwischenflansch-Sensor umfasst in Kombination einen Zwischenflansch des Wellengehäuses und den zentrisch wellengeträgerten Geber in Form des verwendungsgemäßen Plastoferrit-Ringes. Der Zwischenflansch weist ein radial mit gleichmäßigem Abstand zum Geber angeordnetes Sensor-Array auf.

Ein Sensor-Array bezeichnet eine Sensor-Anordnung, welche das Geber-Signal nicht nur punktuell an einem Messpunkt, sondern auch über eine Strecke oder Fläche verteilt zu erfassen vermag. Dies kann beispielsweise über eine Vielzahl an Sondenmesspunkten oder über einen flächig erstreckten Sensor mit einer Messfläche bereitgestellt werden. Durch flächige Detektion der Impulse kann die Signalqualität durch Interpolation der in Summe erhaltenen Informationen beträchtlich erhöht werden. Ein solches Summensignal macht eine vorteilhafte Steigerung der Signalqualität zugänglich. Besonders vorteilhaft werden im Bereich extrem schnell ansprechender Hochgeschwindigkeitsantriebe Messbereiche mit logarithmisch abnehmendem Abstand zur Erzeugung eines Summensignals verwendet. Bei beispielsweise dekadisch abnehmendem Abstand entspricht dann ein mit doppelter Geschwindigkeit anfallendes Summensignal einer zehnfachen Drehgeschwindigkeit der Welle. Mithin werden über logarithmisch variierte Messbereiche Wellengeschwindigkeiten im Bereich mehrerer Größenordnungen klar differenziert.

Vorteilhaft weist der Zwischenflansch-Sensor eine mit dem Sensor verbundene Regel-Einrichtung auf, welche mit Geber und einer Wellenantriebseinrichtung wechselwirkend verbindbar ausgebildet ist. Eine solche Regel-Einrichtung wirkt im einfachsten Fall drehzahlbegrenzend auf den Wellenantrieb ein und regelt die Drehzahl in Abhängigkeit der im Sensor erfassten Impulsgeschwindigkeit des rotierenden Gebers; damit wird die Drehzahl in einem vorbestimmten Bereich gehalten, der die Stabilitätsgrenzen des Plastoferrit-Ringes und/oder der Welle und der daran angeschlossenen Baugruppen nicht überschreitet. Für komplexere Antriebe ist die Regeleinrichtung auslesbar ausgebildet und erlaubt das Auslesen der Sensor-Daten, welche wiederum zur Generierung von Regelbefehlen für den Antrieb verwendet werden können. In Kombination mit vorteilhaft angeordneten Messbereichen und/oder vorteilhaft ausgebildeten Magentisierungen wird hierbei das Sensorsignal bevorzugt über eine integrierte Auswert-Schaltung, besonders bevorzugt über platinengeträgerte Schaltkreise, vorverarbeitet, um die Sensordaten direkt in aussagekräftigem Format auslesbar bereitzustellen; dadurch wird Rechenzeit gespart und eine besonders schnell auslesbare, situationsabhängig regelbare Vorrichtung bereitgestellt.

Bevorzugt ist in einem Sensor-Array eine Vielzahl an Mess-Bereichen im Array über einen radialen Messbogen verteilt angeordnet, wobei die Anzahl der Bereiche prim zur Menge und/oder Wegstrecke der Magnetisierungen des Gebers gehalten ist.

Durch teilerfremde Gesamtmengen von Messbereichen, Magnetisierungen und Feldstärkevariationen wird eine Anzahl an eindeutigen Positionen in Höhe des Produkts der drei Zahlen erreicht. Beispielsweise wird bei 7 Messbereichen und 64 Magnetisierungen mit 3 Bereichen variierte Feldstärke die Anzahl an eindeutig identifizierbaren Positionen verdreifacht, da 3 teilerfremd zu 7 und 64 gehalten ist.

Durch prim gehaltene Abstände von Bereichen und Magnetisierungen wird die Messgenauigkeit erhöht. Beispielsweise wird bei einem Messpunkt-Abstand von 3 Längeneinheiten und einem Magnetisierungs-Abstand von 4 Einheiten mit 4 Messbereichen ein Summensignal zugänglich, dessen zeitliche Abfolge die Interpolation der Wellenposition auf eine Längeneinheit erlaubt.

Besonders vorteilhaft werden beide Maßnahmen in Kombination genutzt, um die Wellenbewegung präzise und mit höchster Genauigkeit abzubilden.

Bevorzugt weist der Zwischenflansch innenseitig eine durchgehende, abdichtende Metallfläche auf. Mit innenseitiger, durchgehender Metallfläche wird der im Zwischenflansch angeordnete Sensor vollständig vom Innenraum des Gehäuses abgetrennt und thermisch verbessert isoliert. Besonders vorteilhaft ist die Metallfläche als feldverstärkend profilierte Metallfläche ausgebildet. Bei bekannten, magnetischen Eigenschaften der abtrennenden Metallfläche wird das Magnetfeld des Gebers auf den Messbereich des rückseitig angeordneten Sensors über eine vorbestimmte Raumform der Sensor-Fassung des Zwischenflansches fokussiert und die Signalstärke und - qualität wird erhöht.

Besonders Vorteilhaft sind hierbei die Messbereiche des Sensors über eine Halterung - beispielsweise eine Platine - exakt vorgegeben und die Position der Halterung ist durch eine formschlüssige, asymmetrische Sensorfassung im Zwischenflansch vorgegeben. Selbst bei Austausch oder Wartung des Sensors ist bei solcher Bauweise eine fehlerhafte Ausrichtung des Sensor-Arrays nicht mehr möglich.

Besonders vorteilhaft ist solch ein Sensor-Array mit radial gleichmäßigem Abstand zum Geber ohne Kontakt zum gekapselten Wellenraum außenseitig zur Metallfläche entnehmbar in den Zwischenflansch integriert. Ein so eingebautes Sensor-Array kann gewartet und ggf. ausgetauscht werden, ohne dass dafür eine Demontage des Zwischenflansches notwendig wird.

Erfindungsgemäß weist die Vorrichtung als Impulsgeber einen erfindungsgemäßen Geber als Teil eines Zwischenflansch-Sensors auf. Hierbei umschließt ein Zwischenflansch des Wellengehäuses den zentrisch wellengeträgerten Geber in Form des beanspruchten Plastoferrit-Ringes zumindest teilweise mit einem radial mit gleichmäßigem Abstand zum Geber angeordneten Sensor-Array. Dabei ist der Plastoferrit-Ring dauerelastisch mit einer Stahlnabe verklebt oder vulkanisiert und die Stahlnabe ist ihrerseits auf der Welle angebracht. Der Zwischenflansch weist weiterhin platinengeträgerte, integrierte Schaltkreise auf, welche vorteilhaft schnell und direkt die in Summe erhaltenen Informationen unter Verbesserung der Signalqualität interpolieren. Hierbei erlaubt die Anbringung über eine Stahl-Nabe durch Auswahl des passenden Stahls eine materialtechnisch inerte und korrosiv langlebige Kontaktfläche zwischen Nabe und Welle. Selbst bei geschmierten oder geölten Wellen kann hier der Kontaktbereich von Geber zu Welle so ausgestaltet werden, dass auch langfristig keine Korrosion wie Rost oder eine korrosive Kontaktreaktion der Materialpaarung zu befürchten wäre. Weiterhin wird durch die Integration von interpolierenden, integrierten Schaltkreisen und deren Anordnung auf einer Platine ein extrem kompaktes Design zugänglich, bei dem besonders bevorzugt auch das Sensor-Array über die Platine geträgert und ausgerichtet wird; vorteilhaft bietet eine asymmetrische Platinenform eine ein-eindeutige Einbaulage innerhalb des Zwischenflansches und ermöglicht über zumindest umgreifende Segmente eine extrem ortsstabile Positionierung. Besonders bevorzugt kann mit platinengeträgertem Sensor-Array in Kombination mit interpolierenden Schaltkreisen und Auswert- sowie Regelbaugruppen ein Design erreicht werden, bei dem Zwischenflansch-Breiten von wenigen Millimetern ausreichen, um Betriebsdrehzahlen in extrem breiten Bereich bis zu 6.500 Umdrehungen pro Minute sicher und zuverlässig regeln zu können.

Bevorzugt wird ein Plastoferrit-Ring als wellengeträgerter Impulsträger einer vollständig gekapselten Antriebswelle angeordnet, wobei bei einem per Flansch anschließbaren Antrieb mit 10 Watt bis 25 Kilowatt Leistung mit auskragender Antriebswelle die auskragende Antriebswelle im Flanschbereich auskragend angeordnet ist;
die auskragende Welle im angeflanschten Zustand von dem durch Flansche gebildeten Gehäuse gekapselt kraftübertragend in anzutreibende Elemente eingreift;
auf der Antriebswelle ein Metallring mit radial mindestens nach außen auskragenden Segmenten unter Klemmspannung an einen antriebsseitigen Anschlag aufgeschoben angeordnet ist;
die auskragenden Segmente eine axial zur Welle ausgerichtete Längserstreckung und eine matt-rauhe Oberfläche aufweisen;
eine Nabe auf den Metallring unter Klemmspannung aufschiebbar ausgebildet ist;
die der Achse zugewandte Innenseite der Nabe schräg zu den Auskragungen angeordnete, matt-rauhe Riefen aufweist;
die Nabe aussenseitig quer zur axialen Richtung des Antriebs umlaufende Riefen mit einer Tiefe im Mikrometerbereich aufweist;
die Nabe antriebsseitig einen radial auskragenden Rand mit antriebsseitiger Anschlag-Auflage und abtriebsseitig einen an der Welle anliegenden Abschluss aufweist;
auf der Nabe außenseitig und abtriebseitig zum Rand ein am Rand flächig anliegender, zentrierter Plastoferrit-Ring angeordnet ist;
zwischen Plastoferrit-Ring und Nabe mindestens eine dauerelastisch vernetzte Kleberschicht einen Kraftschluss bereitstellend angeordnet ist;
der Plastoferrit-Ring als Geber zumindest im periphären Bereich seiner Plastoferrit-Ringaußenfläche eine vorbestimmte Anordnung von magnetisierten Bereichen aufweist;
am Antrieb ein Zwischenflansch angeflanscht ist;
der Zwischenflansch den Anschlag der Welle und die Position des per Nabe aufschiebbaren Gebers mit durchgehender, metallischer Innenwand radial umschließend ausgebildet ist;
das Spaltmaß zwischen Plastoferrit-Ringaußenfläche und metallischer, durchgehender Innenwand des Zwischenflansches im Bereich von 0,05 bis 1 mm, bevorzugt 0,1 bis 0,7 mm, besonders bevorzugt 0,2 bis 0,6 mm, gehalten ist;
im Zwischenflansch mindestens ein magnetoresistiver oder Hallspannungs-Sensor oder AMR-Sensor, bevorzugt mindestens ein magnetoresistiver Sensor, in einem Sensor-Array mit einem Abstand von 0,15 bis 1 mm, bevorzugt 0,2 bis 0,7 mm, besonders bevorzugt 0,3 bis 0,6 mm, zur Plastoferrit-Ringaußenfläche angeordnet, bevorzugt entnehmbar angeordnet, ist eine auslesbare, mit dem Sensor-Array verbundene Regel-Einrichtung mit Geber und Antrieb wechselwirkend verbindbar ausgebildet ist.

Weitere Vorteile ergeben sich aus den Ausführungsbeispielen. Es versteht sich, dass die beschriebenen Merkmale und Vorteile und Ausführungsbeispiele nicht beschränkend aufzufassen sind. Vorteilhafte, zusätzliche Merkmale und zusätzliche Merkmalskombinationen, wie sie in dieser Beschreibung erläutert sind, können im Rahmen des unabhängigen Anspruches im beanspruchten Gegenstand sowohl einzeln als auch abweichend kombiniert verwirklicht werden, ohne dass der Bereich der Erfindung verlassen würde.

### KURZE BESCHREIBUNG DER FIGUREN

Die Figuren veranschaulichen an Hand von Prinzipskizzen:
- Fig. 1: Einbaulage eines erfindungsgemäßen Plastoferrit-Ringes an einer Antriebswelle
- Fig. 2: Einbaulage eines erfindungsgemäßen Impulsgebers in Form eines Zwischenflansch-Sensors
- Fig. 3: Einbausituation eines erfindungsgemäßen Antriebs mit Zwischenflansch-Sensor an einem Getriebe

### DETAILLIERTE ERLÄUTERUNG DER ERFINDUNG AN HAND VON AUSFÜHRUNGBEISPIELEN

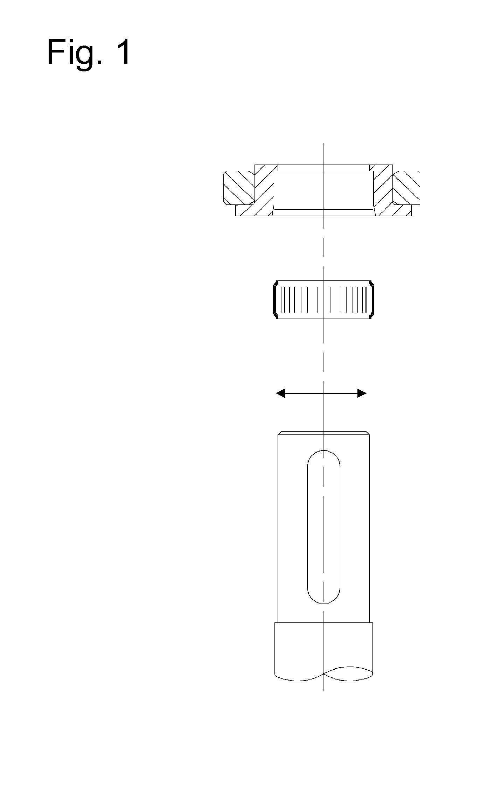

Fig. 1 veranschaulicht in extrudierter Ansicht der einzelnen Baugruppen mit Schnittbildern die Einbaulage eines Plastoferritringes an einer Antriebswelle. Die hier vertikal ausgerichtet abgebildete Antriebswelle weist einen per Doppelpfeil hervorgehobenen Antriebswellen-Durchmesser auf. Der Antriebswellen-Durchmesser ist geringfügig weiter als der Innendurchmesser des in axialer Orientierung in Seitenansicht abgebildeten Metallringes. Der Metallring weist als vertikale Striche veranschaulichte Auskragungen in gleichmäßiger, radialer Anordnung entlang seiner Aussenfläche auf. Mit sanftem Druck kann der Metallring unter leichter Klemmspannung auf der Welle bis zum Anschlag in Form einer Wellenschulter hinabgeschoben werden.

Oberseitig zum Metallring ist die Nabe mit dem Plastoferrit-Ring in axialer Orientierung als Schnittbild veranschaulicht.

Die Nabe weist antriebsseitig einen radial auskragenden, hier horizontal ausgerichteten Rand auf, welcher antriebsseitig als Anschlag-Auflage fungiert. Der Innendurchmesser der Nabe ist geringer als der Außendurchmesser der Auskragungen des Metallringes, sodass die Nabe in vollständig aufgeschobener Position innenseitig mit den Auskragungen verzahnt unter Klemmspannung gehaltert ist. Weiterhin überträgt sich die Klemmspannung auf den Metallring und drückt diesen fest an die Welle an.

An ihrem abtriebseitigen, oberen Ende weist die Nabe einen an der Welle schlüssig anliegenden Abschluss auf. Besonders vorteilhaft kann solch ein Abschluss als Widerlager für eine gleitend anliegende Passfeder dienen, um die Nabe sicher in der aufgeschobenen Position zu halten.

Der Plastoferrit-Ring umschließt die Nabe seitlich und liegt dabei auch an der abtriebseitigen Fläche des Randes der Nabe auf. Nabe und Plastoferrit-Ring sind über mindestens eine Schicht eines dauerelastischen Klebers (nicht dargestellt) fest miteinander verbunden.

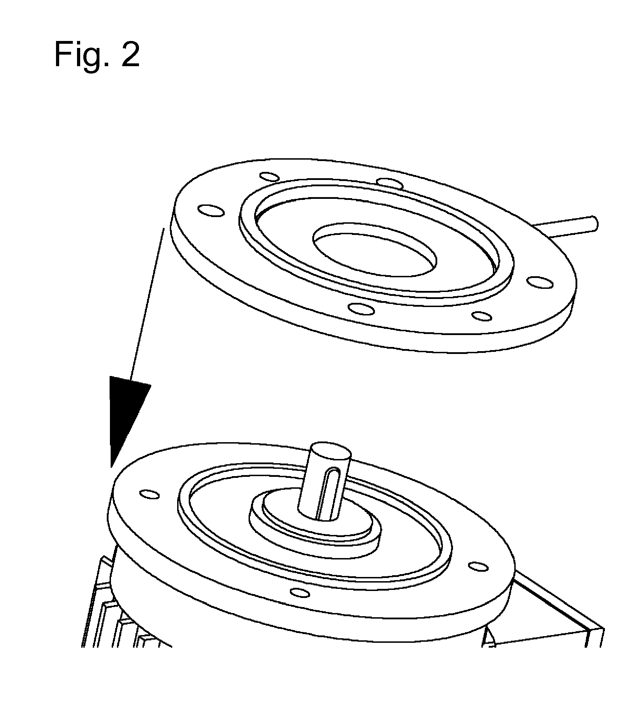

Fig. 2 veranschaulicht in isometrischer Sicht die Einbaulage eines Zwischenflansch-Sensors. Der Zwischenflansch weist eine Ausführung einer Datenleitung auf, welche als quer ausgerichteter Rundsteg veranschaulicht ist. Über die Datenleitung ist das Sensor-Array bzw. seine Daten auslesbar zugänglich. Unterseitig zum Zwischenflansch ist der Flansch eines Antriebs mit auskragender Welle mit einem aufgeschobenen Plastoferrit-Ring auf einer Nabe mit oberseitig den Ring einfassendem Abschluss abgebildet. Zwischenflansch und Antriebsflansch weisen passgenau übereinstimmende Bohrungen für die Montage sowie ineinander eingreifende, zentrierende, radiale Stege entlang ihrer Anlageflächen auf. Über optionale Dichtringe (nicht dargestellt) kann bei der Montage eine vollständige, gasdichte Verkapselung erfolgen.

Der Zwischenflansch weist eine innenseitig durchgehende Innenfläche auf, welche radial den Plastoferritring mit dem verwendungsgemäßen Spaltmaß in montierter Position umschließt. Hinter der durchgehenden, metallischen Innenfläche ist das Sensor-Array (nicht sichtbar) im Inneren des Flansches angeordnet.

Wie die Veranschaulichung verdeutlicht ragen Antriebswellen von vorteilhaft kompakten, anflanschbaren Antrieben allenfalls mit dem 3 bis 6fachen ihres Eigendurchmessers über den Antrieb hinaus.

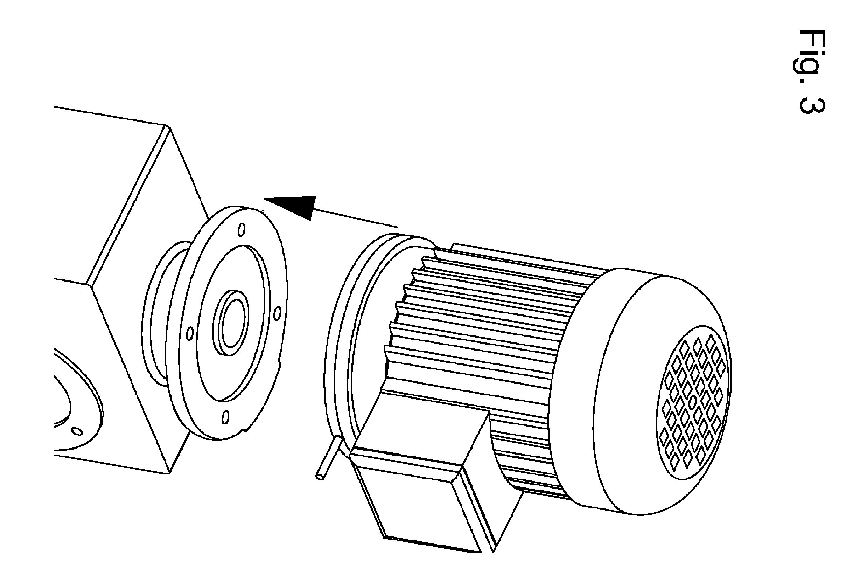

Fig. 3 veranschaulicht in isometrischer Sicht die Einbaulage eines mit Zwischenflansch versehenen Antriebs an einem Getriebe-Flansch. Der Zwischenflansch weist die als Rundsteg veranschaulichte Datenausführung auf. Der Antrieb wird vorteilhaft über eine als rechteckige Auskragung veranschaulichte Regel-Baugruppe mit Hilfe des Zwischenflansch-Sensors geregelt und auf die vorgegebenen Drehzahlen begrenzt. Das Bild veranschaulicht weiterhin die vorteilhaft kompakte und platzsparende Bauweise von Flanschverbindungen im Antriebsbereich.

In besonders bevorzugter Ausführungsform umfasst eine erfindungsgemäße Vorrichtung in Form eines Zwischenflansch-Sensors einen zentrisch wellengeträgerten Geber in Form eines Plastoferrit-Ringes, welcher von einem Zwischenflansch mit einem Spaltmaß ab 0,05 Millimeter kompakt umschlossen angeordnet ist. Der Geber ist dauerelastisch mit einer Stahlnabe verklebt oder vulkanisiert, wobei die Stahlnabe korrosionsstabil und kraftschlüssig auf der Welle angebracht ist. Durch vorteilhafte Anordnung eines Sensor-Arrays und integrierten Schaltkreisen auf einer zumindest einseitig in SMD-Technik montierten Platine wird eine Kompaktheit erzielt, welche bereits mit einer Zwischenflansch-Breite von wenigen Millimetern, beispielsweise 7 Millimetern, ein Sensor-Array bereitstellt, welches die Genauigkeit bezogen auf die binäre Signalbasis um 5 Größenordnungen, also den Faktor 2 hoch ⁵ = 32fach, zu steigern vermag. Zudem können über die integrierten Schaltkreise vorteilhaft auch Spannungsanpassungen ermöglicht werden, sodass selbst bei verschiedenen Anschlussspannungen im Bereich von 5 bis 24 Volt stets ein universelles Signal als HTL- oder TTL-Signal bereitgestellt werden kann. In Kombination mit der erhöhten, interpolierten Genauigkeit erlaubt dies mit unterschiedlichsten Regelungssystemen eine Regelung von Antrieben, selbst wenn diese extrem niedrige oder auch hohe Betriebsdrehzahlen von 6.500 Umdrehungen pro Minute vorsehen.

Erfindungsgemäß wird die Signalqualität konstruktiv durch das Platinendesign zusätzlich stabilisiert: Durch Platzierung aller resistiven, kapazitiven und induktiven Bauteile wie Widerstände, Kondensatoren, Spulen oder auch Dioden auf einer Seite der Platine und Anordnung feld-sensitiver IC's wie drahtgebondete IC-Körper auf der anderen Seite der Platine, werden Bauteil-Felder, welche sonst in direkt benachbarter Position die Funktionsweise eines IC beeinträchtigen könnten, vorteilhaft durch die Trägerplatine selbst gedämpft. Zudem können so die IC's mit vorteilhaftem Abstand zueinander und zu dem Sensor-Array platziert werden, wodurch sowohl die Detektion als auch die Interpolation der Impulse stabilisiert und verbessert wird. Dadurch wird in besonders bevorzugter Kombination bei kompakterem Design ein genaueres, klareres und vielseitigeres Regelsignal zugänglich gemacht.

## Patentansprüche

1. Wellengeträgerter Geber in Form eines Plastoferrit-Ringes, wobei
- der Geber als zentrisch wellengeträgerter Geber im Bereich eines Zwischenflansches eines Wellengehäuses angeordnet ist,
- der Plastoferrit-Ring bei einer zumindest teilweise von dem angeflanschten Gehäuse abtrennend umschlossenen, bevorzugt einer in einem über Flansche zusammengesetzten Gehäuse gekapselten, Welle im umschlossenen Bereich mit einem Spaltmaß zum Gehäuse von 0,05 bis 1 mm, bevorzugt 0,1 bis 0,7 mm, besonders bevorzugt 0,2 bis 0,6 mm, angeordnet ist
- der Plastoferrit-Ring dauerelastisch mit einer Stahlnabe verklebt oder vulkanisiert ist,
- der Zwischenflansch platinengeträgerte, integrierte Schaltkreise aufweist,
- die Schaltkreise die in Summe erhaltenen Informationen unter Verbesserung der Signalqualität interpolierend ausgebildet sind, **dadurch gekennzeichnet, dass**
- im Platinendesign alle resistiven, kapazitiven und induktiven Bauteile wie Widerstände, Kondensatoren, Spulen oder auch Dioden auf einer Seite der Platine und feld-sensitive, integrierte Schaltkreise auf der anderen Seite der Platine angeordnet sind .

2. Geber nach dem vorhergehenden Anspruch, **dadurch gekennzeichnet, dass** die Nabe kraftschlüssig, bevorzugt form- und kraftschlüssig, auf der Welle befestigbar ist.

3. Geber nach einem der vorhergehenden Ansprüche, **dadurch gekennzeichnet, dass** eine Nabe über eine Klemmverbindung, bevorzugt eine formschlüssige Klemmverbindung, mit der Welle kraftschlüssig verbunden und zumindest kraftschlüssig vom Plastoferrit-Ring umschlossen ist.

4. Vorrichtung, bevorzugt Impulsgeber, mit einem Geber nach einem der vorhergehenden Ansprüche aufweisend einen Zwischenflansch-Sensor, der Zwischenflansch-Sensor umfassend den Zwischenflansch eines Wellengehäuses mit zentrisch wellengeträgertem Geber in Form eines Plastoferrit-Ringes nach einem der vorhergehenden Ansprüche, wobei der Zwischenflansch ein radial mit gleichmäßigem Abstand zum Geber angeordnetes Sensor-Array aufweist, bevorzugt aufweisend eine mit dem Sensor verbundene Regel-Einrichtung, welche mit Geber und einer Wellenantriebseinrichtung wechselwirkend verbindbar ausgebildet ist.

5. Vorrichtung nach dem vorhergehenden Anspruch, **dadurch gekennzeichnet, dass** eine Vielzahl an Mess-Bereichen im Array über einen radialen Messbogen verteilt angeordnet sind, wobei die Anzahl der Bereiche prim zur Menge und/oder Wegstrecke der Magnetisierungen des Gebers gehalten ist.

6. Vorrichtung nach einem der beiden vorhergehenden Ansprüche, wobei der Zwischenflansch innenseitig eine durchgehende, abdichtende Metallfläche aufweist, bevorzugt eine feldverstärkend profilierte Metallfläche aufweist, wobei ein radial mit gleichmäßigem Abstand zum Geber angeordnetes Sensor-Array ohne Kontakt zum gekapselten Wellenraum außenseitig zur Metallfläche, vorzugsweise entnehmbar, in den Zwischenflansch integriert ist.

7. Vorrichtung nach einem der vorhergehenden Vorrichtungsansprüche in Form eines per Flansch anschließbaren Antriebs mit 10 Watt bis 25 Kilowatt Leistung mit auskragender Antriebswelle wobei
die auskragende Antriebswelle im Flanschbereich auskragend angeordnet ist,
die auskragende Welle im angeflanschten Zustand von dem durch Flansche ausgebildeten Gehäuse gekapselt und kraftübertragend in anzutreibende Elemente eingreifend ausgebildet ist,
auf der Antriebswelle ein Metallring mit radial mindestens nach außen auskragenden Segmenten unter Klemmspannung an einen antriebsseitigen Anschlag aufgeschoben ist,
die auskragenden Segmente eine axial zur Welle ausgerichtete Längserstreckung und eine matt-rauhe Oberfläche aufweisen,
eine Nabe auf den Metallring unter Klemmspannung aufschiebbar ausgebildet ist, die der Achse zugewandte Innenseite der Nabe schräg zu den Auskragungen angeordnete, matt-rauhe Riefen aufweist,
die Nabe aussenseitig quer zur axialen Richtung des Antriebs umlaufende Riefen mit einer Tiefe im Mikrometerbereich aufweist,
die Nabe antriebsseitig einen radial auskragenden Rand mit antriebsseitiger Anschlag-Auflage und abtriebsseitig einen an der Welle anliegenden Abschluss aufweist,
auf der Nabe außenseitig und abtriebseitig zum Rand ein am Rand flächig anliegender, zentrierter Plastoferrit-Ring angeordnet ist,
zwischen Plastoferrit-Ring und Nabe mindestens eine dauerelastisch vernetzte Kleberschicht einen Kraftschluss bereitstellend angeordnet ist,
der Plastoferrit-Ring als Geber zumindest im periphären Bereich seiner Plastoferrit-Ringaußenfläche eine vorbestimmte Anordnung von magnetisierten Bereichen aufweist,
am Antrieb ein Zwischenflansch angeflanscht ist,
der Zwischenflansch den Anschlag der Welle und die Position des per Nabe aufschiebbaren Gebers mit durchgehender, metallischer Innenwand radial umschließend ausgebildet ist,
das Spaltmaß zwischen Plastoferrit-Ringaußenfläche und metallischer, durchgehender Innenwand des Zwischenflansches im Bereich von 0,05 bis 1 mm, bevorzugt 0,1 bis 0,7 mm, besonders bevorzugt 0,2 bis 0,6 mm, gehalten ist
im Zwischenflansch mindestens ein magnetoresistiver oder Hallspannungs-Sensor oder AMR-Sensor, bevorzugt mindestens ein magnetoresistiver Sensor oder AMR-Sensor, in einem Sensor-Array mit einem Abstand von 0,15 bis 1 mm, bevorzugt 0,2 bis 0,7 mm, besonders bevorzugt 0,3 bis 0,6 mm, zur Plastoferrit-Ringaußenfläche angeordnet, bevorzugt entnehmbar angeordnet, ist und
eine auslesbare, mit dem Sensor-Array verbundene Regel-Einrichtung mit Geber und Antrieb wechselwirkend verbindbar ausgebildet ist.

## Claims

1. Shaft-mounted transmitter in the form of a plastoferrite ring, wherein
- the transmitter is arranged as a centrically shaft-mounted transmitter in the region of an intermediate flange of a shaft housing,
- with a shaft that is at least partially enclosed in a separating manner by the flange-mounted housing, preferably a shaft that is encapsulated in a housing assembled by means of flanges, the plastoferrite ring is arranged in the enclosed region with a clearance from the housing of 0.05 to 1 mm, preferably 0.1 to 0.7 mm, particularly preferably 0.2 to 0.6 mm,
- the plastoferrite ring is adhesively bonded or vulcanized in a permanently elastic manner to a steel hub,
- the intermediate flange has board-mounted, integrated circuits,
- the circuits are formed so as to interpolate the items of information obtained in total while improving the signal quality, **characterized in that**
- in the board design, all of the resistive, capacitive and inductive components, such as resistors, capacitors, coils or else diodes, are arranged on one side of the board and field-sensitive, integrated circuits are arranged on the other side of the board.

2. Transmitter according to the preceding claim, **characterized in that** the hub can be fastened on the shaft in a frictionally engaging manner, preferably in an interlocking and frictionally engaging manner.

3. Transmitter according to one of the preceding claims, **characterized in that** a hub is connected to the shaft in a frictionally engaging manner by means of a clamping connection, preferably an interlocking clamping connection, and is enclosed at least in a frictionally engaging manner by the plastoferrite ring.

4. Device, preferably a pulse transmitter, with a transmitter according to one of the preceding claims, having an intermediate-flange sensor, the intermediate-flange sensor comprising the intermediate flange of a shaft housing with a centrically shaft-mounted transmitter in the form of a plastoferrite ring according to one of the preceding claims, wherein the intermediate flange has a sensor array arranged radially at a uniform distance from the transmitter, preferably having a control device which is connected to the sensor and is formed in such a way that it can be connected to the transmitter and a shaft driving device in an interacting manner.

5. Device according to the preceding claim, **characterized in that** a multiplicity of measuring regions are arranged in the array, distributed over a radial measuring arc, wherein the number of regions is kept prime to the amount and/or extent of the magnetizations of the transmitter.

6. Device according to one of the two preceding claims, wherein the intermediate flange has on the inside a continuous, sealing metal surface, preferably has a metal surface profiled in a fieldreinforcing manner, wherein a sensor array arranged radially at a uniform distance from the transmitter is integrated in the intermediate flange without contact with the encapsulated shaft space on the outside in relation to the metal surface, preferably in a removable manner.

7. Device according to one of the preceding device claims in the form of a drive that can be connected by flange with an output of 10 W to 25 kW and with a projecting drive shaft, wherein
the projecting drive shaft is arranged projecting in the flange region,
in the flange-mounted state, the projecting shaft is encapsulated by the housing formed by flanges and is formed so as to engage in a force-transmitting manner into elements to be driven,
on the drive shaft, a metal ring with at least radially outwardly projecting segments has been pushed on as far as a stop on the drive side, under clamping tension,
the projecting segments have a longitudinal extent aligned axially in relation to the shaft and a matt-rough surface,
a hub is formed in such a way that it can be pushed onto the metal ring under clamping tension, the inner side of the hub that is facing the axis having matt-rough channels arranged obliquely in relation to the projections,
the hub has on the outside channels running around transversely in relation to the axial direction of the drive, with a depth in the micrometre range,
the hub has on the drive side a radially projecting periphery with a drive-side support and has on the driven side a termination lying against the shaft,
on the hub, on the outside and on the driven side towards the periphery, a centred plastoferrite ring is arranged, lying flat against the periphery,
at least one layer of permanently elastically crosslinked adhesive is arranged between the plastoferrite ring and the hub, providing a frictional engagement,
the plastoferrite ring has as a transmitter a predetermined arrangement of magnetized regions, at least in the peripheral region of its plastoferrite ring outer surface,
an intermediate flange is flange-mounted on the drive,
the intermediate flange is formed so as to radially enclose the stop of the shaft and the position of the transmitter that has a continuous, metallic inner wall and can be pushed on by way of the hub,
the clearance between the plastoferrite ring outer surface and the metallic, continuous inner wall of the intermediate flange is kept in the range of 0.05 to 1 mm, preferably 0.1 to 0.7 mm, particularly preferably 0.2 to 0.6 mm,
in the intermediate flange, at least one magnetoresistive or Hall-voltage sensor or AMR sensor, preferably at least one magnetoresistive sensor or AMR sensor, is arranged in a sensor array at a distance of 0.15 to 1 mm, preferably 0.2 to 0.7 mm, particularly preferably 0.3 to 0.6 mm, from the plastoferrite ring outer surface, preferably is arranged in a removable manner, and
a control device that can be read out and is connected to the sensor array is formed in such a way that it can be connected to the transmitter and the drive in an interacting manner.

## Revendications

1. Transmetteur supporté par un arbre sous la forme d'un anneau de plasto-ferrite, dans lequel
- le transmetteur est disposé sous la forme d'un transmetteur supporté centralement par un arbre dans la zone d'une bride intermédiaire d'un logement d'arbre,
- l'anneau de plasto-ferrite, dans le cas d'un arbre au moins partiellement délimité de manière séparée par le boîtier monté par brides, et de préférence d'un arbre encapsulé dans un boîtier assemblé par l'intermédiaire de brides, est disposé dans la zone délimitée avec un interstice par rapport au boîtier de 0,05 à 1 mm, et de préférence de 0,1 à 0,7 mm, et plus préférablement, de 0,2 à 0,6 mm,
- l'anneau de plasto-ferrite est collé ou vulcanisé de manière élastiquement permanente à un moyeu en acier,
- la bride intermédiaire présente des circuits intégrés supportés par des cartes,
- les circuits sont conçus pour interpoler l'ensemble des informations obtenues en améliorant la qualité du signal, **caractérisé en ce que**
- lors de la conception de la carte, tous les composants résistifs, capacitifs et inductifs, comme les résistances, les condensateurs, les bobines ainsi que les diodes, sont disposés sur une face de la carte et des circuits intégrés sensibles aux champs sont disposés sur l'autre face de la carte.

2. Transmetteur selon l'une quelconque des revendications précédentes, **caractérisé en ce que** le moyeu peut être fixé à l'arbre par assemblage à force, et de préférence par complémentarité de forme et assemblage à force.

3. Transmetteur selon l'une quelconque des revendications précédentes, **caractérisé en ce qu'**un moyeu est relié à l'arbre par assemblage à force par l'intermédiaire d'un dispositif de serrage, de préférence un dispositif de serrage à complémentarité de forme, et est entouré par l'anneau de plasto-ferrite au moins par assemblage à force.

4. Dispositif, de préférence, transmetteur d'impulsion, comportant un transmetteur selon l'une quelconque des revendications précédentes, comprenant un capteur de bride intermédiaire, le capteur de bride intermédiaire comprenant la bride intermédiaire d'un boîtier d'arbre muni d'un transmetteur supporté centralement sur l'arbre sous la forme d'un anneau de plasto-ferrite selon l'une quelconque des revendications précédentes, dans lequel la bride intermédiaire présente un réseau de capteurs disposé avec un espacement radial régulier par rapport au transmetteur, présentant de préférence un dispositif de régulation relié au transmetteur, qui est conçu pour pouvoir être relié en alternance au transmetteur et à un dispositif d'entraînement d'arbre.

5. Dispositif selon l'une quelconque des revendications précédentes, **caractérisé en ce qu'**une pluralité de zones de mesure sont disposées de manière répartie sous forme de réseau sur un arc de mesure, dans lequel le nombre des zones est maintenu premier par rapport à la quantité et/ou à la distance de magnétisation du transmetteur.

6. Dispositif selon l'une des deux revendications précédentes, dans lequel la bride intermédiaire présente intérieurement une surface métallique d'étanchéité continue, de préférence une surface métallique profilée de manière à amplifier le champ, dans lequel un réseau de capteurs disposé radialement avec un espacement régulier par rapport au transmetteur est intégré à la bride intermédiaire sans contact avec l'espace encapsulé de l'arbre extérieurement à la surface métallique, de préférence de manière amovible.

7. Dispositif selon l'une quelconque des revendications précédentes sous la forme d'un dispositif d'entraînement pouvant être raccordé à chaque bride ayant une puissance de 10 watts à 25 kilowatts, comportant un arbre d'entraînement en porte-à-faux, dans lequel
l'arbre d'entraînement en porte-à-faux est disposé en porte-à-faux dans la zone de la bride,
l'arbre en porte-à-faux à l'état monté par brides est réalisé de manière à être encapsulé par le boîtier formé par les brides et de manière à s'insérer dans des éléments devant être entraînés afin de transmettre une force,
un anneau métallique est amené à coulisser sur l'arbre d'entraînement, celui-ci comportant des segments en porte-à-faux vers l'extérieur sous l'effet d'une tension de serrage appliquée à une butée côté entraînement,
les segments en porte-à-faux présentent une extension longitudinale orientée axialement par rapport à l'arbre et une surface mate-rugueuse,
un moyeu est réalisé de façon à être amené à coulisser sur l'anneau métallique sous l'effet d'une tension de serrage, et la face interne du moyeu qui est opposée à l'axe présente des cannelures mates-rugueuses disposées de manière oblique par rapport aux parties en porte-à-faux,
le moyeu présente extérieurement et transversalement à la direction axiale du dispositif d'entraînement des cannelures périphériques ayant une profondeur se situant dans le domaine du micromètre,
le moyeu présente, côté entraînement, un bord radialement en porte-à-faux comportant un appui de butée côté entraînement et une terminaison montée sur l'arbre côté entraîné,
un anneau de plasto-ferrite est disposé sur le moyeu extérieurement et côté entraîné par rapport au bord, de manière centrée et tangente au bord,
entre l'anneau de plasto-ferrite et le moyeu se trouve au moins une couche de colle réticulée de manière élastiquement permanente et à fournir une adhérence, l'anneau de plasto-ferrite, en tant que transmetteur, présente, au moins dans la zone périphérique de sa surface extérieure d'anneau de plasto-ferrite, un agencement prédéterminé de zones magnétisées,
une bride intermédiaire est montée sur le dispositif d'entraînement,
la bride intermédiaire est réalisée de manière à entourer radialement d'une paroi interne métallique continue l'arbre et la position du transmetteur pouvant être amené à coulisser sur le moyeu,
l'interstice entre la surface externe de l'anneau de plasto-ferrite et la paroi interne continue métallique de la bride intermédiaire est maintenu dans l'intervalle de 0,05 à 1 mm, et de préférence, de 0,1 à 0,7 mm, et plus préférablement, de 0,2 à 0,6 mm,
au moins un capteur magnétorésistif ou à tension de Hall ou un capteur AMR, et de préférence au moins un capteur magnétorésistif ou un capteur AMR contenus dans un réseau de capteurs, sont disposés à une distance de 0,15 à 1 mm, et de préférence, de 0,2 à 0,7 mm, et plus préférablement, de 0,3 à 0,6 mm de la surface externe de l'anneau de plasto-ferrite dans la bride intermédiaire, et sont de préférence disposés de manière amovible, et
un dispositif de régulation lisible relié au réseau de capteurs est réalisé de manière pouvoir être relié en alternance au transmetteur et au dispositif d'entraînement.
